# Europäisches Patentamt
## European Patent Office
## Office européen des brevets

(19)

(11) Veröffentlichungsnummer: **0 007 565**
**B1**

(12)

# EUROPÄISCHE PATENTSCHRIFT

(45) Veröffentlichungstag der Patentschrift:
**01.02.84**

(51) Int. Cl.³: **C 08 F 10/00,** C 08 F 4/64

(21) Anmeldenummer: **79102511.7**

(22) Anmeldetag: **18.07.79**

(54) **Verfahren zum Herstellen einer Komponente für Polymerisationskatalysatoren.**

(30) Priorität: **20.07.78 DE 2831830**

(43) Veröffentlichungstag der Anmeldung:
**06.02.80 Patentblatt 80/3**

(45) Bekanntmachung des Hinweises auf die Patenterteilung:
**01.02.84 Patentblatt 84/5**

(84) Benannte Vertragsstaaten:
**AT BE DE FR GB IT**

(56) Entgegenhaltungen:
**FR - A - 2 016 081**
**FR - A - 2 324 652**
**US - A - 3 380 981**

(73) Patentinhaber: **BASF Aktiengesellschaft,
Carl-Bosch-Strasse 38, D-6700 Ludwigshafen (DE)**

(72) Erfinder: **Staiger, Gerhard, Dr., Virchowstrasse 26,
D-6712 Bobenheim-Roxheim (DE)**

## Verfahren zum Herstellen einer Komponente für Polymerisationskatalysatoren

Die vorliegende Erfindung betrifft ein Verfahren zum Herstellen einer Titan-Komponente für Polymerisationskatalysatoren des Ziegler-Natta-Typs, wobei man zunächst

(1) in einer ersten Stufe

    (1.1)    100 Gewichtsteile eines Alkoholats der allgemeinen Formel $Mg(OR)_2$, worin R steht für eine 1 bis 6 Kohlenstoffatome aufweisende Alkylgruppe, mit

    (1.2)    soviel Gewichtsteilen Benzoylchlorid wie sie einem Molverhältnis Alkoholat (1.1) zu Benzoylchlorid (1.2) von 100 : 5 bis 100 : 100 entsprechen,

miteinander in Kontakt bringt, dann

(2) in einer zweiten Stufe

    (2.1)    100 Gewichtsteile des aus Stufe (1) resultierenden Stoffes mit
    (2.2)    300 bis 1800 Gewichtsteilen Titantetrachlorid

zusammenbringt, das Ganze unter ständiger Durchmischung 0,1 bis 5 Stunden auf einer Temperatur im Bereich von 40 bis 180°C hält und den dabei resultierenden Feststoff unter Abtrennung überschüssigen Titantetrachlorids isoliert, und schließlich

(3) in einer dritten Stufe

    (3.1)    100 Gewichtsteile des aus Stufe (2) resultierenden Feststoffes erneut mit
    (3.2)    300 bis 1800 Gewichtsteilen Titantetrachlorid

zusammenbringt, das Ganze unter ständiger Durchmischung 0,1 bis 5 Stunden auf einer Temperatur im Bereich von 40 bis 180°C hält und den dabei resultierenden Feststoff unter Abtrennung überschüssigen Titantetrachlorids isoliert.

Ein Verfahren dieser Art ist aus der FR-A-2 324 652 bekannt; es ist vornehmlich auf das Ziel gerichtet, solche Titan-Komponenten zu gewinnen, die — nach dem Aktivieren mit aluminiumorganischen Verbindungen oder dergleichen — Katalysatoren ergeben, die bei der Polymerisation der Olefine zu hohen spezifischen Ausbeuten an Polyolefinen und/oder zu Polyolefinen mit einem relativ hohen Anteil an stereoregulärem Polymerisat führen. Weitere Ziele sind, die Polyolefine in gut handhabbarer Form, in leicht weiter zu verarbeitender Form und mit den erwünschten anwendungstechnischen Eigenschaften zu erhalten; — wobei letztere je nach dem vorgesehenen Verwendungszweck in unterschiedliche Richtungen gehen können.

Im einzelnen lehrt die FR-A-2 324 652, daß die besten Ergebnisse erhalten werden, wenn man in der ersten Stufe neben dem Alkoholat und dem Acylchlorid einen weiteren zusätzlichen Ausgangsstoff, nämlich ein Siliciumhalogenid, einsetzt. Des weiteren lehrt die zitierte FR-A, daß es für optimale Ergebnisse auch erforderlich ist, in der ersten Stufe bei Temperaturen von 50 bis 150°C zu arbeiten.

Der vorliegenden Erfindung lag demgegenüber die Aufgabe zugrunde, ein Verfahren der eingangs definierten Art aufzuzeigen, mit dem es — ohne zusätzlichen Einsatz eines Siliziumhalogenids — möglich ist, Titan-Komponenten zu erhalten, die erhöht technisch fortschrittliche Eigenschaften mit sich bringen.

Es wurde gefunden, daß die gestellte Aufgabe gelöst werden kann, wenn in der ersten Stufe (1) das Inkontaktbringen derart erfolgt, daß man die beiden Komponenten (1.1) und (1.2) in einer Kugelschwingmühle unter einer Mahlbeschleunigung von 45 bis 55 m · sec$^{-2}$ über eine Zeitspanne von 5 bis 50 Stunden bei einer Temperatur von −30 bis −10°C in Abwesenheit von Verdünnungsmitteln miteinander vermahlt.

Dementsprechend ist der Gegenstand der vorliegenden Erfindung ein Verfahren zum Herstellen einer Titan-Komponente für Polymerisationskatalysatoren des Ziegler-Natta-Typs, wobei man zunächst

(1) in einer ersten Stufe

    (1.1)    100 Gewichtsteile eines Alkoholats der allgemeinen Formel $Mg(OR)_2$, worin R steht für eine 1 bis 6, vorzugsweise 2 bis 4 Kohlenstoffatome aufweisende Alkylgruppe, mit

    (1.2)    soviel Gewichtsteilen Benzoylchlorid wie sie einem Molverhältnis Alkoholat (1.1) zu Benzoylchlorid (1.2) von 100 : 5 bis 100 : 100, vorzugsweise 100 : 10 bis 100 : 50 entsprechen,

miteinander in Kontakt bringt, dann

(2) in einer zweiten Stufe

    (2.1)    100 Gewichtsteile des aus Stufe (1) resultierenden Stoffes mit
    (2.2)    300 bis 1800, vorzugsweise 500 bis 1000 Gewichtsteilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 70 bis 100° C hält und den dabei resultierenden Feststoff unter Abtrennung überschüssigen Titantetrachlorids isoliert, und schließlich

(3) in einer dritten Stufe

    (3.1)    100 Gewichtsteile des aus Stufe (2) resultierenden Feststoffes erneut mit
    (3.2)    300 bis 1800, vorzugsweise 500 bis 1000 Gewichtsteilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 120 bis 140° C hält und den dabei resultierenden Feststoff unter Abtrennung überschüssigen Titantetrachlorids isoliert.

Das erfindungsgemäße Verfahren ist dadurch gekennzeichnet, daß in der ersten Stufe (1) das Inkontaktbringen derart erfolgt, daß man die beiden Komponenten (1.1) und (1.2) in einer Kugelschwingmühle unter einer Mahlbeschleunigung von 45 bis 55 m · sec$^{-2}$ über eine Zeitspanne von 5 bis 50 Stunden bei einer Temperatur von $-30$ bis $-10$° C in Abwesenheit von Verdünnungsmitteln miteinander vermahlt.

Die stoffliche Seite des neuen Verfahrens bedingt keine Besonderheiten, denn die Komponenten (1.1) und (1.2) sind aus der organischen Chemie wohlbekannt. Zu erwähnen ist allenfalls, daß sich als Alkoholate (1.1) vor allem die eignen, die abgeleitet sind vom Äthyl-, n-Propyl-, i-Propyl-, n-Butyl-, sec-Butyl- oder tert-Butylalkohol. Das zu verwendende Titantetrachlorid (2.2) und (3.2) sollte zweckmäßigerweise von der Art sein, die üblicherweise für Polymerisationskatalysatoren eingesetzt wird.

Die Durchführung des erfindungsgemäßen Verfahrens ist einfach und für den Fachmann ohne Erläuterungen möglich. Lediglich zu den Stufen (2) und (3) ist zu erwähnen, daß die Isolierung des jeweils resultierenden Feststoffs zweckmäßigerweise durch Absaugen und die Abtrennung überschüssigen Titantetrachlorids zweckmäßigerweise durch Waschen mit einem flüssigen Kohlenwasserstoff — bis dieser kein Titantetrachlorid mehr aufnimmt — erfolgt. Der hierbei in Betracht kommende flüssige Kohlenwasserstoff kann ein Kohlenwasserstoff der Art sein, die üblicherweise mit Titan-Komponenten für Katalysatoren des Ziegler-Natta-Typs ohne Schaden für den Katalysator bzw. dessen Titan-Komponente zusammengebracht wird; — z. B. bei der Polymerisation von $\alpha$-Monoolefinen. Als Beispiele für geeignete Kohlenwasserstoffe seien genannt: Pentane, Hexane, Heptane, Benzine und Cyclohexan.

Die nach dem erfindungsgemäßen Verfahren hergestellten Titan-Komponenten für Katalysatoren des Ziegler-Natta-Typs lassen sich bei der Polymerisation von $\alpha$-Olefinen in einschlägig üblicher Weise einsetzen, d. h. man wird diese Titan-Komponenten im allgemeinen zusammen mit einem metallorganischen Aktivator verwenden, insbesondere mit Aluminiumalkylverbindungen der Formeln Al(Alkyl)$_3$ bzw. ClAl(Alkyl)$_2$, die 1 bis 8 Kohlenstoffatome per Alkylrest aufweisen, und vor allem mit Triäthylaluminium bzw. Diäthylaluminiumchlorid.

Wie sich gezeigt hat, ist es in vielen Fällen von Vorteil, die neuen Titan-Komponenten bei der Polymerisation nicht nur zusammen mit Aktivatoren der vorerwähnten Art zu verwenden, sondern auch zusätzlich mit einschlägig üblichen Promotoren. Dabei haben sich im gegebenen Zusammenhang besonders bewährt die Ester von C$_1$- bis C$_4$-Alkanolen mit p-Alkyl- oder — vorzugsweise — p-Alkoxybenzoesäuren mit C$_1$- bis C$_4$-Alkyl- bzw. Alkoxygruppen; — wofür ein typisches Beispiel der Anissäureäthylester ist.

Die nach dem erfindungsgemäßen Verfahren hergestellten Titan-Komponenten liefern besonders gute Ergebnisse bei der Trockenpolymerisation von $\alpha$-Olefinen, d. h. der Polymerisation in Abwesenheit flüssiger Hilfsmedien; aber auch die Polymerisation in Anwesenheit flüssiger Hilfsmedien ist mit gutem Erfolg möglich. Das Molekulargewicht läßt sich durch die üblichen Regler, insbesondere Wasserstoff, einstellen. Besonders geeignete zu polymerisierende $\alpha$-Olefine sind solche mit 2 bis 6 Kohlenstoffatomen, insbesondere Propylen, Buten-1 und 4-Methylpenten-1, sowie — zur Copolymerisation — Äthylen.

**0 007 565**

Beispiel

A) Herstellen der Titan-Komponente des Polymerisationskatalysators

(1) In der ersten Stufe werden

(1.1)    100 Gewichtsteile Magnesiumäthylat, $Mg(OC_2H_5)_2$, mit
(1.2)    soviel (20,5) Gewichtsteilen Benzoylchlorid wie sie einem Molverhältnis Alkoholat (1.1) zu Benzoylchlorid (1.2) von 100 : 16,7 entsprechen

in einer Kugelschwingmühle unter einer Mahlbeschleunigung von $51\,m \cdot sec^{-2}$ über eine Zeitspanne von 15 Stunden bei einer Temperatur von $-20°C$ in Abwesenheit von Verdünnungsmitteln miteinander vermahlen.

(2) In der zweiten Stufe werden

(2.1)    100 Gewichtsteile des aus Stufe (1) resultierenden Stoffes mit
(2.2)    600 Gewichtsteilen Titantetrachlorid

zusammengebracht und das Ganze unter ständigem Rühren 1 Stunde auf einer Temperatur im Bereich von 75 bis 85°C gehalten. Danach wird der resultierende Feststoff durch Filtration und Nachwaschen mit n-Heptan isoliert, wobei das Nachwaschen solange erfolgt, bis sich im Filtrat kein Titantetrachlorid mehr nachweisen läßt.

(3) In der dritten Stufe werden

(3.1)    100 Gewichtsteile des aus Stufe (2) resultierenden Feststoffes erneut mit
(3.2)    650 Gewichtsteilen Titantetrachlorid

zusammengebracht und das Ganze unter ständigem Rühren 1 Stunde auf einer Temperatur im Bereich von 128 bis 132°C gehalten. Danach wird der resultierende Feststoff durch Filtration und Nachwaschen mit n-Heptan isoliert, wobei das Nachwaschen solange erfolgt, bis sich im Filtrat kein Titantetrachlorid mehr nachweisen läßt.

Auf diese Weise wird eine Titan-Komponente erhalten, die einen Titangehalt von 4,5 Gew.-% und einen Chlorgehalt von 61,9 Gew.-% aufweist.

B) Polymerisation mittels der Titan-Komponente

Ein Rührgefäß wird mit 500 ml n-Heptan, 0,4 g der Titan-Komponente, 10 mMol Aluminiumtriäthyl sowie 2 mMol Anissäureäthylester (als Promotor) beschickt.
Die eigentliche Polymerisation wird unter ständigem Rühren bei 60°C während 3 Stunden durchgeführt mit Propylen als Monomer, dessen Druck während der Polymerisation konstant auf 1 bar gehalten wird.
Das Polymerisat wird hierbei mit einer Ergiebigkeit von 517 g Polypropylen pro g Titan-Komponente erhalten; es weist 8,8% in siedendem n-Heptan löslicher Anteile auf.

**Patentanspruch**

Verfahren zum Herstellen einer Titan-Komponente für Polymerisationskatalysatoren des Ziegler-Natta-Typs, wobei man zunächst

(1) in einer ersten Stufe

(1.1)    100 Gewichtsteile eines Alkoholats der allgemeinen Formel $Mg(OR)_2$, worin R steht für eine 1 bis 6 Kohlenstoffatome aufweisende Alkylgruppe; mit
(1.2)    soviel Gewichtsteilen Benzoylchlorid wie sie einem Molverhältnis Alkoholat (1.1) zu Benzoylchlorid (1.2) von 100 : 5 bis 100 : 100 entsprechen,

miteinander in Kontakt bringt, dann

(2) in einer zweiten Stufe

(2.1)    100 Gewichtsteile des aus Stufe (1) resultierenden Stoffes mit

4

0 007 565

(2.2)    300 bis 1800 Gewichtsteilen Titantetrachlorid

zusammenbringt, das Ganze unter ständiger Durchmischung 0,1 bis 5 Stunden auf einer Temperatur im Bereich von 40 bis 180°C hält und den dabei resultierenden Feststoff unter Abtrennung überschüssigen Titantetrachlorids isoliert, und schließlich

(3)   in einer dritten Stufe

(3.1)    100 Gewichtsteile des aus Stufe (2) resultierenden Feststoffes erneut mit
(3.2)    300 bis 1800 Gewichtsteilen Titantetrachlorid

zusammenbringt, das Ganze unter ständiger Durchmischung 0,1 bis 5 Stunden auf einer Temperatur im Bereich von 40 bis 180°C hält und den dabei resultierenden Feststoff unter Abtrennung überschüssigen Titantetrachlorids isoliert,

dadurch gekennzeichnet, daß in der ersten Stufe (1) das Inkontaktbringen derart erfolgt, daß man die beiden Komponenten (1.1) und (1.2) in einer Kugelschwingmühle unter einer Mahlbeschleunigung von 45 bis 55 m · sec$^{-2}$ über eine Zeitspanne von 5 bis 50 Stunden bei einer Temperatur von $-30$ bis $-10°$C in Abwesenheit von Verdünnungsmitteln miteinander vermahlt.

**Claim**

A process for the preparation of a titanium component for polymerization catalysts of the Ziegler-Natta type, in which

(1)   in a first stage

(1.1)    100 parts by weight of an alcoholate of the general formula Mg(OR)$_2$, where R is alkyl of 1 to 6 carbon atoms, are brought into contact with
(1.2)    so many parts by weigth of benzoyl chloride as correspond to a molar ratio of alcoholate (1.1) to benzoyl chloride (1.2) of from 100 : 5 to 100 : 100, and then

(2)   in a second stage

(2.1)    100 parts by weight of the material resulting from stage (1) are brought together with
(2.2)    from 300 to 1,800 parts by weigth of titanium tetrachloride,

the batch is kept at from 40 to 180°C for from 0.1 to 5 hours, with constant mixing, and the resulting solid is isolated, excess titanium tetrachloride being removed, and finally

(3)   in a third stage
(3.1)    100 parts by weight of the solid resulting from stage (2) are again brought together with
(3.2)    from 300 to 1,800 parts by weight of titanium tetrachloride,

the batch is kept at from 40 to 180°C for from 0.1 to 5 hours, with constant mixing, and the resulting solid is isolated, excess titanium tetrachloride being removed, wherein the contacting in the first stage (1) is carried out in such a way that the two components (1.1) and (1.2) are milled in a vibratory ball mill with a milling acceleration of from 45 to 55 m · sec$^{-2}$ for a period of from 5 to 50 hours at from $-30$ to $-10°$C in the absence of a diluent.

**Revendication**

Procédé de préparation d'un composant au titane pour catalyseurs de polymérisation du type Ziegler-Natta, dans lequel on met en contact

(1)   dans un premier stade

(1.1)    100 parties en poids d'un alcoolate de la formule générale Mg(OR)$_2$, dans laquelle R désigne un radical alcoyle en C$_1$ à C$_6$, et
(1.2)    les parties en poids de chlorure de benzoyle correspondant à un rapport molaire de l'alcoolate (1.1) au chlorure de benzoyle (1.2) de 100 : 5 à 100 : 100, puis

5

**0 007 565**

(2)  dans un deuxième stade

    (2.1)    100 parties en poids du produit formé dans le stade (1) et
    (2.2)    300 à 1800 parties en poids de tétrachlorure de titane,

on maintient le mélange pendant 0,1 à 5 heures, sous agitation permanente, à une température comprise dans la gamme de 40 à 180°C et isole la matière solide obtenue avec élimination du tétrachlorure de titane en excès, et

(3)  dans un troisième stade, on mélange à nouveau

    (3.1)    100 parties en poids de la matière solide obtenue dans le stade (2) avec
    (3.2)    300 à 1800 parties en poids de tétrachlorure de titane,

on maintient le mélange pendant 0,1 à 5 heures, sous agitation permanente, à une tmpérature comprise dans la gamme de 40 à 180°C et isole la matière solide obtenue avec élimination du tétrachlorure de titane en excès, caractérisé en ce que, dans le premier stade (1), la mise en contact des composants (1.1) et (1.2) est réalisée par broyage, en l'absence de diluants, dans un broyeur à boulets oscillant, à une température de $-30$ à $-10°C$ et pendant 5 à 50 heures sous une accélération de broyage de 45 à 55 m · s$^{-2}$.